# EUROPÄISCHE PATENTSCHRIFT

(11) **EP 1 627 921 B1**
(45) Veröffentlichungstag und Bekanntmachung des Hinweises auf die Patenterteilung: **27.08.2008**
(21) Anmeldenummer: 04019542.2
(22) Anmeldetag: 18.08.2004
(51) Int. Cl.: C12Q 1/68

(54) **Verfahren zur Messung einer Nukleinsäureamplifikation in Real Time beinhaltend die Positionierung eines Reaktionsgefässes relativ zu einer Detektionseinheit**
Method for detecting nucleic acid amplification in real-time comprising positioning a reaction vial relative to a detection unit
Méthode d'amplification en temps réel impliquant le positionnement des tubes réactionnels par rapport à l'unité de détection

(43) Veröffentlichungstag der Anmeldung: 22.02.2006
(73) Patentinhaber: Roche Diagnostics GmbH, 68305 Mannheim (DE); F. Hoffmann-La Roche AG, 4070 Basel (CH)
(72) Erfinder: Weilke, Christian, Dr., 82377 Penzberg (DE)

(56) Entgegenhaltungen:
- EP-A- 0 747 447
- WO-A-97/46707
- WO-A-20/04064751
- US-A- 5 248 782
- US-A- 5 326 692
- US-A- 5 433 896
- US-A- 5 514 710
- US-A- 5 736 333
- US-A- 5 846 737
- US-B1- 6 268 222
- WITTWER C T ET AL: "CONTINUOUS FLUORESCENCE MONITORING OF RAPID CYCLE DNA AMPLIFICATION" BIOTECHNIQUES, EATON PUBLISHING, NATICK, US, Bd. 22, Nr. 1, 1997, Seiten 130-131,134, XP000683698 ISSN: 0736-6205
- OEFNER P J ET AL: "HIGH-RESOLUTION LIQUID CHROMATOGRAPHY OF FLUORESCENT DYE-LABELED NUCLEIC ACIDS" ANALYTICAL BIOCHEMISTRY, ACADEMIC PRESS, SAN DIEGO, CA, US, Bd. 223, Nr. 1, 1994, Seiten 39-46, XP001041430 ISSN: 0003-2697
- FRIES G A ET AL: "Fluorescent dye based optical position sensing for planar linear motors" ROBOTICS AND AUTOMATION, 1999. PROCEEDINGS. 1999 IEEE INTERNATIONAL CONFERENCE ON DETROIT, MI, USA 10-15 MAY 1999, PISCATAWAY, NJ, USA,IEEE, US, Bd. 2, 10. Mai 1999 (1999-05-10), Seiten 1614-1619, XP002323792 ISBN: 0-7803-5180-0

## Beschreibung

### Technisches Gebiet:

Die vorliegende Erfindung betrifft ein System zur verbesserten optischen Messung von analytischen Reaktionen, insbesondere die Messung von Echtzeit PCR Amplifikationsreaktionen mithilfe von Fluoreszenzmessung.

### Stand der Technik:

Real Time PCR Verfahren gehören heutzutage zu den etablierten Standard-Methoden zur Analyse von Nukleinsäuren in vielen Molekularbiologischen Forschungslaboren und Diagnostischen Einrichtungen. Zur Durchführung derartiger Verfahren werden verschiedene instrumentelle Plattformen von diversen Herstellern auf dem Markt angeboten.

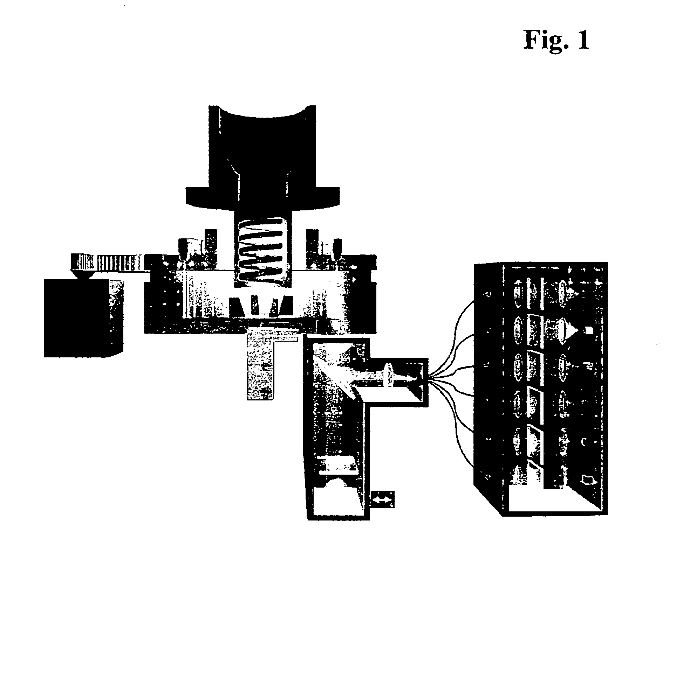

Ein seit mehreren Jahren etabliertes System ist das LightCycler Instrument (Roche Applied Science Cat.No. 03 531 414 201). Bei dem LighCycler Gerät handelt es sich um ein Real Time Thermocycler Instrument, bei dem kapillare Reaktionsgefäße mithilfe eines Luftstroms erhitzt bzw. abgekühlt werden. Die Anregung fluoreszenzmarkierter Hybridisierungssonden oder interkalierender Farbstoffe erfolgt mithilfe einer Licht emittierenden Diode (LED), die Detektion der Fluoreszenz mithilfe eines Fluorimeters, enthaltend multiple Photohybride zur Detektion verschiedener Wellenlängen (WO 97/46712). Dabei erfolgt sowohl die Anregung als auch die Messung des emittierten Lichts mithilfe eines Strahlengangs parallel zur Längsachse der Kapillare (Fig. 1). Das Anregungslicht wird durch das untere Ende der Kapillare in das Reaktionsgefäß eingestrahlt. Ein großer Anteil des emittierten Lichts wird an der Kapillarenwandung reflektiert und gelangt in entgegengesetzter Richtung wieder durch das untere Kapillarenende zur Detektion auf die Photohybride.

Wegen des geringen Durchmessers der Kapillaren sowie des begenzten Detektionswinkels des Fluorimeters muß die Messposition für jede Kapillare exakt eingestellt werden. Die Kapillaren befinden sich in einem drehbaren Karussel als Reaktionsgefäßhalter, der zur Aufnahme von 32 Kapillaren geeignet ist. Jede Kapillare kann mithilfe eines ersten, das Karussel rotierend bewegenden Stepper Motors auf eine bestimmte Messposition in tangentialer Richtung positioniert werden. Ein zweiter Stepper Motor kann das Fluorimeter in eine bestimmte Position gegenüber der jeweils zu messenden Kapillare in radialer Richtung positionieren.

LightCycler Instrumente aller bisherigen Geräteversionen ermitteln zu Beginn eines Experiments für jede einzelne Kapillare die optimale Position für die Fluoreszenzmessung ("Seek"). Dazu wird die mit Reaktionsmix befüllte Kapillare in der Kapillarenhalterung, d.h. bspw im LightCycler Karussel über das Messfenster des Fluorimeters gefahren. Im Bereich der erwarteten Position wird in kleinen Schritten weitergefahren und die Stelle maximaler Fluoreszenz ermittelt. An dieser Stelle wird rechtwinklig dazu das Fluorimeter mit einem zweiten Stepper Motor verschoben und ebenfalls die Position maximaler Fluoreszenz ermittelt. Diese x,y-Position wird für jede Kapillare gespeichert und bei jeder nachfolgenden Messung wieder angefahren.

Die als Reaktionsgefäße verwendeten Kapillaren sind so dünn, dass eine hohe Signalintensität nur in einem sehr begrenzten Bereich gemessen wird. Aufgrund von Varianzen in der Kapillarform und der Karussels muss bei jedem Experiment zuerst ein solcher Seek durchgeführt werden (LightCycler Operator's Manual, Version 3.5, Okt. 2000)

Für den Seek muss das Reaktionsgemisch schon vor der PCR eine ausreichend hohe Grundfluoreszenz aufweisen, sonst kann kein Maximum des Fluoreszenzsignals bestimmt werden. Speziell mit nicht-fluoreszierenden Quenchern, wie sie bei TaqMan-Sonden zunehmend verwendet werden, kann die Grundfluoreszenz so niedrig sein, dass Kapillaren im LightCycler Instrument nicht positioniert werden können.

Aufgabe der vorliegenden Erfindung war es somit, eine Lösung dafür zu etablieren, wie Kapillaren enthaltend eine Reaktionsmischung, die vor Beginn der Reaktion keine oder nur eine zu geringe Fluoreszenz aufweisen, richtig positioniert werden können.

### Kurzbeschreibung der Erfindung

Diese Aufgabe wird erfindungsgemäß gelöst durch ein Verfahren zur Messung einer Nukleinsäureamplifikation in Real Time, umfassend
a) Bereitstellung eines Real Time PCR Instruments, enthaltend
   - einen Reaktionsgefäßhalter zur Aufnahme von multiplen Reaktionsgefäßen
   - Mittel zur Positionierung der multiplen Reaktionsgefäße in einem Reaktionsgefäßhalter relativ zur Detektionseinheit
b) Befüllung multipler Reaktionsgefäße mit einer Reaktionsmischung enthaltend thermostabile Polymerase, Deoxynukleotide und Puffer, mindestens zwei Amplifikations-Primer, mindestens eine Fluoreszenz-markierte Hybridisierungssonde und einem freien, ungebundenen, passiven Fluoreszenzfarbstoff, der während und nach der gesamten Amplifikations-Reaktion in freier Form vorliegt.
c) Bestimmung der Position der maximalen Fluoreszenzemission der freien ungebundenen, passiven Fluoreszenzfarbs in multiplen Reaktionsgefäßen in Abhängigkeit von ihrer relativen Position zur Detektionseinheit
d) Durchführung der Amplifikationsreaktion und Messung der Fluoreszenzemission der mindestens einen Hybridisationssonde während und optional nach der Amplifikationsreaktion für jedes Reaktionsgefäß an der Position mit maximaler Fluoreszenzemission aus Schritt c)

Die relative Position des einzelnen Reaktionsgefäßes zur Detektionseinheit kann dadurch verändert werden, daß die Position des Reaktionsgefäßhalters verändert wird. Die relative Position aber auch dadurch verändert werden, dass die Position der Detektionseinheit verändert wird. Darüber hinaus können für eine exakte Positionierung auch beide Positionen verändert werden.

Von der Verwendung eines Referenzfarbstoffs in der PCR-Reaktionsmischung, wie bei ABI-Produkten verwendet (US 5,736,333, Apr. 7, 1998), ist diese Methode klar abgegrenzt. Bei ABI wird der Referenzfarbstoff (ROX) zur Normalisierung der Signalhöhen verschiedener Reaktionsgefäße verwendet, um Varianzen der optischen Messeinheit, der Mikrotiterplatten, sowie der Zusammensetzung und der Füllhöhen der Reagenzienmixe zu kompensieren

Gegenstand der vorliegenden Erfindung ist auch ein System, bestehend aus
- einem Real Time PCR Instrument enthaltend Mittel zur Positionierung von multiplen Reaktionsgefäßen in einem Reaktionsgefäßhalter relativ zu einer Detektionseinheit
- einer Reaktionsmischung enthaltend thermostabile Polymerase, Deoxynukleotide, Puffer und einen freien, ungebundenen, passiven Fluoreszenzfarbstoff **dadurch gekennzeichnet**, dass der freie, ungebundene, passive Fluoreszenzfarbstoff während und nach der gesamten Amplifikationsreaktion in vollständig freier Form vorliegt.

Derartige System enthalten vorzugsweise Kapillaren als Reaktionsgefäße.

Gegenstand der vorliegenden Erfindung ist darüber hinaus eine Reaktionsmischung enthaltend thermostabile Polymerase, Deoxynukleotide, Puffer und zusätzlich einen freien, ungebundenen, passiven Fluoreszenzfarbstoff mit einer Emissionswellenlänge von mindestens 600 nm, der während und nach der gesamten Amplifikationsreaktion in freier Form vorliegt.

Darüber hinaus enthalten derartige Mischungen vorzugsweise mindestens zwei Amplifikations-Primer und mindestens eine Fluoreszenz-markierte Hybridisierungssonde, beispielsweise eine TaqMan Sonde.

Gegenstand der vorliegenden Erfindung ist schließlich auch ein Kit, enthaltend thermostabile Polymerase, Deoxynukleotide und Puffer sowie zusätzlich einen freien, ungebundenen, passiven Fluoreszenzfarbstoff mit einer Emissionswellenlänger von mindestens 600 nm, der während und nach der Amplifikationsreaktion in vollständig freier Form vorliegt. Dearartige Kits können zusätzlich spezifische Hybridsierungssonden wie beispielsweise TaqMan Sonden oder auch Amplifikations-Primer enthalten.

### Detaillierte Beschreibung der Erfindung

Die vorliegende Erfindung betrifft in einem ersten Aspekt ein Verfahren zur Messung einer Nukleinsäureamplifikation in Real Time gemäß Anspruch 1.

Für den freien, ungebundenen, passiven Fluoreszenzfarbstoff haben sich langwellige Fluoreszenzfarbstoffe mit einem Emissionsmaximum von mehr als 600 nm als besonders vorteilhaft erwiesen, da die Messung in den kurzwelligeren Detektionskanälen nicht beeinflusst wird. Darüber hinaus werden auch Fluoreszenzfarbstoffe, die an eine weitere Chemische Komponente gekoppelt sind, offenbart, sofern derartige Moleküle nicht mit der Amplifikationsareaktion interferieren und nicht während der Reaktion in das Amplifikat eingebaut werden.

Aufgrund der Tatsache, dass sich beispielsweise beim LightCycler Karussel nicht nur die einzelnen Bohrungen für die Kapillaren, sondern auch die Kapillaren untereinander in ihren Dimensionen zumindest innerhalb gewisser Grenzen unterscheiden, ist eine Positionierung für jede einzelnen Kapillare vor jedem Experiment notwendig. Essentiell ist ein derartiges Verfahren, wenn als Reaktionsgefäße Kapillaren verwendet werden, da ohne eine exakte Positionierung derartiger Reaktionsgefäße im Strahlengang der Detektionseinheit, d. h. des Fluorimeters, keine zuverlässige Fluoreszenzmessung durchgeführt werden kann.

Bei dem einen Mittel oder mehreren Mitteln zur Positionierung multipler Reaktionsgefäße in einem Reaktionsgefäßhalter relativ zur Detektionseinheit kann es sich erfindungsgemäß um jegliche Art von fein justierbaren Antrieb handeln. Vorzugsweise handelt es sich dabei um einen oder mehre Stepper Motoren, die in sehr kleinen Schritten entweder die Position des Reaktionsgefäßhalters oder die Position der Detektionseinheit oder beide verändern können.

Erfindungsgemäß kann es sich bei der Detektionseinheit um jegliche Art von Detektoren handeln, die in der Lage sind, Fluoreszenzsignale zu detektieren. Dazu gehören beispielsweise Fluorimeter mit einem oder mehreren Photohybrid Dioden oder auch CCD Kameras.

### Detektionsformate

Das oben beschriebene LightCycler Instrument kann für verschiedene Detektionsformate benutzt werden:

### a) Interkalierender DNA-Bindefarbstoff:

Das jeweilige Amplifikationsprodukt wird in diesem Fall durch einen DNA-Bindefarbstoff nachgewiesen, welcher bei Interaktion mit doppelsträngiger Nukleinsäure nach Anregung mit Licht einer geeigneten Wellenlänge ein entsprechendes Fluoreszenzsignal emitiert. Als besonders geeignet für diese Anwendung haben sich die Farbstoffe SybrGreen und SybrGold (Molecular Probes) erwiesen. Die vorhandene Grundfluoreszenz des SybrGreen vor Beginn einer Amplifikationsreaktion reicht in der Regel aus, um einen Positionierungsprozess durchzuführen.

### b) FRET-Hybridisierungssonden:

Für dieses Testformat werden zwei einzelsträngige Hybridisierungssonden gleichzeitig verwendet, die komplementär zu benachbarten Stellen desselben Strangs der amplifizierten Target-Nukleinsäure sind. Beide Sonden sind mit unterschiedlichen Fluorophoren markiert, die sich bezüglich ihrer Extinktions- und Emissionswellenlängen unterscheiden. Bei Anregung des kurzwelligeren Fluorophors ist ohne Target-Nukleinsäure fast ausschließlich die Fluoreszenz dieses Fluorophors messbar. Hybridisieren beide Sonden an amplifizierte Target-Nukleinsäure, nähern sich die beiden Fluorophore soweit an, daß der angeregte Fluorophor nach dem Prinzip des Fluoreszenzresonanzenergietransfers die absorbierte Energie auf den zweiten Fluorophor übertragen kann und dessen Emission im langwelligen Detektionskanal messbar wird (WO 97/46707). Dabei wird als sogenannte Donor-Komponente beispielsweise Fluoreszein, mit Licht einer geeigneten Wellenlänge angeregt. Bei räumlicher Nähe zu einer geeigneten Akzeptorkomponente wie beispielsweise bestimmten Rhodamin-Derivaten erfolgt dann ein Resonanzenergietransfer auf die Akzeptorkomponente, so daß der Akzeptorfluorophor Licht einer höheren Emissionswellenlänge emittiert. Auch für dieses Format ist die Emission des FRET Donors hinreichend, um einen Positionierungsprozess durchführen zu können.

### c) TaqMan-Hybridisierungssonden

Eine einzelsträngige Hybridisierungssonde wird mit 2 Komponenten markiert. Bei Anregung der ersten Komponente mit Licht einer geeigneten Wellenlänge wird nach dem Prinzip des Fluoreszenzresonanzenergietransfers die absorbierte Energie auf die zweite Komponente, den sogenannten Quencher übertragen, so daß die Strahlungsemission der ersten Komponente fast vollständig unterdrückt wird. Während des Annealing Schrittes der PCR Reaktion bindet die Hybridisationssonde an die Target-DNA und wird bei der Primerelongation durch die 5'-3' Exonuklease-Aktivität der Taq-Polymerase gespalten. Dadurch werden die angeregte Fluoreszenzkomponente und der Quencher räumlich voneinander getrennt, so dass eine Fluoreszenzemission der ersten Komponente bei der entsprechenden Wellenlänge gemessen werden kann (US 5,210,015, US 5,487,972, US 5,804,375, US 6,214,979).

Aufgrund der Tatsache, daß derartige Hybridisierungssonden mit nicht-fluoreszierenden Quenchern in ungebundenem, intakten Zustand selbst bei Anregung der ersten Komponente praktisch keine Fluoreszenzemission ausstrahlen, ist es für dieses Format essentiell, die Reaktionsmischung erfindungsgemäß mit einer zusätzlichen, schon vor der Amplifikation detektierbaren Farbstoffkomponente zu versehen, mit deren Hilfe eine Positionierung der Reaktionsgefäße im LightCycler erfolgen kann.

### Zusatz einer Fluoreszenzfarbstoff-Komponente

Für eine sichere Positionierung der LightCycler Kapillaren, besonders bei Reaktionsgemischen mit geringer Grundfluoreszenz wie den TaqMan-Sonden mit nicht fluoreszierenden Quenchern, wird deshalb erfindungsgemäß der Reaktionsmischung ein passiver Fluoreszenzfarbstoff ("Seek Dye") zugesetzt, der die PCR nicht beeinflusst und die optische Detektion nicht stört. Mit anderen Worten, die Reaktionsmischung enthält erfindungsgemäß einen freien, ungebundenen, passiven Fluoreszenzfarbstoff der während und nach der gesamten Amplifikationsreaktion in freier Form vorliegt. Das bedeutet, dass der Farbstoff nicht in Form von markierten Primern oder markierten dNTPs während der Amplifikation kovalent in die Amplifikationsprodukte eingebaut wird und darüber hinaus auch keine Bindungsaffinität zum doppelsträngigen DNA Amplifikationsprodukt aufweist, wie das bspw. bei SybrGreen der Fall ist.

Das Emissionsmaximum dieses passiven Seek Dye liegt vorzugsweise im langwelligen Bereich von mehr als 600 nm und besonders bevorzugt im langwelligsten Detektionskanal des sechskanäligen LightCycler 2.0 Instruments. Die Detektion in den kurzwelligeren Kanälen 530 - 640 nm, die bei LightCycler TaqMan Assays aufgrund der kommerziell verfügbaren und geeigneten Farbstoffe fast ausschließlich verwendet werden, wird dadurch nicht beeinflusst. In den Kanälen 705 und 670 nm ist lediglich eine konstante Erhöhung des Hintergrundsignals sichtbar, die bei der Messung von Signalhöhenveränderungen in der Regel nicht stört. Der Seek Dye besitzt eine ausreichend hohe Stabilität gegen Temperatur- und Lichtbelastung, so dass sich die Eigenschaften während der PCR nicht verändern. Besonders bevorzugt hat sich in diesem Zusammenhang die Verwendung von JA286 (EP 0 747 447, example 1) erwiesen.

Gegenstand der vorliegenden Erfindung ist auch ein System gemäss Anspruch 4.

Bevorzugt enthält das erfindungsgemäße System Kapillaren als Reaktionsgefäße.

Ebenfalls bevorzugt enthält die Reaktionsmischung bereits mindestens zwei Amplifikationsprimer sowie mindestens eine Hybridisierungssonde, beispielsweise eine TaqMan- Hybridisierungssonde.

Darüber hinaus enthält das System als Fluoreszenzfarbstoff-Komponente bevorzugt einen Fluoreszenzfarbstoff mit einem Emissionsmaximum von mehr als 600 nm, beispielsweise den Fluoreszenzfarbstoff JA 286 (EP 0 747 447, example 1).

### Positionierungsprozess

Der Positionierungsprozess (Seek Verfahren) im Light Cycler kann für eine einzelne Kapillare wie folgt verlaufen:

Vor jedem Experiment (Run) müssen von allen Kapillaren mit den darin enthaltenen Reaktionsmischungen die optimalen Messpositionen in radialer und tangentialer Richtung bestimmt werden. Diese Positionen gelten immer für einen gesamten Run und müssen bei jedem Neustart eines Protokolls neu bestimmt werden.

Die geschlossene Kammer wird auf 30°C oder eine andere im Run vorgegebene Temperatur aufgeheizt. Nach Erreichen der Temperatur wird ein Home-Lauf durchgeführt, bei dem die Lichtschranken für Photometer und Rotor als Referenzposition angefahren werden. Danach wird für jede Probe die Position des maximalen Fluoreszenzsignals bestimmt. Die Messung erfolgt in allen vorhandenen Detektionskanälen, der Kanal mit dem höchsten Signal wird ausgewertet

In einem EEPROM genannten Speicherplatz ist die Sollposition für Kapillare 1 als CarOffset und RadOffset gespeichert. Um diese Position wird ein Fenster gespannt, in dem der Seek für Kapillare 1 erfolgt. Die Messung erfolgt entlang 4 kreuzender Bahnen ('#'), daher wird dieser Vorgang als Cross-Seek bezeichnet. Für jede folgende Kapillare wird das Probenkarussel von der jeweils bestimmten Position um 1/32 des Umfangs weitergedreht und erneut der Cross-Seek durchgeführt.

Der Cross-Seek erfolgt in 4 Phasen:
Phase 1 = Karussell
   Durch Drehen des Probenkarussells in kleinen Schritten wird innerhalb des definierten Fensters um die angefahrene Position die Karusselposition des maximalen Signals bestimmt und gespeichert.
Phase 2 = Photometer
   Bei der maximalen Rotorposition von Phase 1 wird innerhalb des definierten Fensters die Photometerposition des maximalen Signals bestimmt und gespeichert.
Phase 3 = Karussell
   Bei der maximalen Photometerposition von Phase 2 wird innerhalb des neuen Fensters um die Karusselposition aus Phase 1 erneut die Karusselposition des maximalen Signals bestimmt und gespeichert.
Phase 4 = Photometer
   Bei der maximalen Karusselposition von Phase 3 wird innerhalb des neuen Fensters um die Photometerposition aus Phase 2 erneut die Photometerposition des maximalen Signals bestimmt und gespeichert.

Nur wenn die maximale Fluoreszenz einen vorgegebenen Minimalwert überschreitet, wird diese Kapillare als gefunden deklariert. Ist das Signal zu gering, gilt diese Kapillare als nicht gefunden. Damit wird vermieden, dass Positionen ohne Reaktionsmischung unsinnig positioniert oder fälschlich ausgewertet werden.Gilt die Kapillare als gefunden, werden die ermittelten Koordinaten von Rotor und Photometer der Phase-4 gespeichert und bei der Vermessung der Kapillare im folgenden RUN jeweils angefahren.

### Mischungen und Kits

In einem weiteren Aspekt betrifft die vorliegende Erfindung eine Reaktionsmischung gemäss Anspruch 6. Vorzugsweise handelt es sich dabei um einem Farbstoff mit einer Emissionswellenlänge von mehr als 600 nm. Besonders bevorzugt ist der Fluoreszenzfarbstoff JA286.

Derartige Mischungen können als Master Mixe für multiple Reaktionen hergestellt werden. Nach entsprechender Aliquotierung können derartige Mischungen vor dem endgültigen Einsatz in einer Amplifikationsreaktion noch mit mindestens 2 spezifischen Amplifikationsprimern sowie mit mindestens einer Fluoreszenzmarkierten Hybridisationssonde wie beispielsweise einer TaqMan-Sonde versehen werden.

Bestandteil der vorliegenden Erfindung sind darüber hinaus Kits gemäss Anspruch 9. Vorzugsweise handelt es sich dabei ebenfalls um einem Farbstoff mit einer Emissionswellenlänge von mehr als 600 nm. Besonders bevorzugt ist der Fluoreszenzfarbstoff JA286.

Dabei sind zwei Arten von Kits zu unterscheiden:

Generische Kits enthalten keine weiteren Bestandteile und können somit für jegliche Art von Real Time PCR unabhängig vom verwendeten Detektionsformat und unabhängig von der zu amplifizierenden Target Sequenz verwendet werden. Der Endverbraucher muß also in diesem Falle noch auf individueller Basis Primer und Hybridisierungssonden gemäß seinen Anforderungen hinzufügen.

Parameterspezifische Kits enthalten zusätzlich in der Regel mindestens zwei Amplifikationsprimer sowie mindestens eine Fluoreszenz-markierte Hybridisierungsssonde, vorzugsweise eine TaqMan Sonde.

Einen Sonderfall stellen sogenannte ASRs (Analyte specific reagents) dar. Derartige Kits enthalten mindestens zwei Amplifikationsprimer, mindestens eine Fluoreszenz-markierte Hybridisierungssonde sowie erfindungsgemäß eine Fluoreszenzfarbstoffkomponente.

### Beschreibung des Sequenzprotokolls

### Beschreibung der Figuren

- Figur 1: Aufbau des LightCycler Instruments
- Figur 2: Amplifiktionskurven einer Cyclophilin A PCR in Gegenwart von unterschiedlichen JA286 Konzentrationen.
- Figur 3: Cyclophilin A PCR mit verschiedenen Mengen an humaner genomischer DNA in Gegenwart des Farbstoffs JA286

Die folgenden Beispiele, Publikationen, das Sequenzprotokoll und die Abbildungen erläutern die Erfindung, deren Schutzumfang sich aus den Patentansprüchen ergibt, weiter. Die beschriebenen Verfahren sind als Beispiele zu verstehen, die auch noch nach Modifikationen den Gegenstand der Erfindung beschreiben.

### Beispiel 1

In einem LightCylcer Experiment wurde ausgehend von 300 pg humaner genomischer DNA ein 442 bp Fragment des Cyclophillin A Gens mit folgenden Primern nach einem Standard Thermocycling Protokoll in Gegenwart von verschiedenn Mengan des Fluoreszenzfarbsotoffs JA 286 (EP 0 747 447, example 1) amplifiziert:
Primer: 5'-GGC CGC GTC TCC TTT GAG (SEQ. ID. No: 1)
5'-CGA GTT GTC CAC AGT CAG CAA TG (SEQ. ID. NO: 2)

Dabei wurde unter den folgenden Bedingungen amplifiziert:

| Program | Cycles | Analysis Mode | Target Temp. [°C] | Hold [hh:mm:ss] | Trans. Rate [°C/s] | Sec. Target | Step Size [°C] | Step Delay [Cycl.] | Acquisition Mode |
|---|---|---|---|---|---|---|---|---|---|
| Heating | 1 | None | 95 | 00:10:00 | 20 | 0 | 0 | 0 | None |
| Cycling | 45 | Quantif. | 95 | 00:00:10 | 20 | 0 | 0 | 0 | None |
| | | | 55 | 00:00:30 | 20 | 0 | 0 | 0 | None |
| | | | 72 | 00:00:01 | 20 | 0 | 0 | 0 | Single |
| Cooling | 1 | | 40 | 00:00:30 | 20 | 0 | 0 | 0 | None |

Das Amplifikatiosnprodukt wurde mithilfe der folgenden TaqMan Sonde im Real Time Modus detektiert:
Sonde: FAM - 5'-AAT GGC AAG ACC AGC AAG AAG ATC AC - TAMRA (SEQ: ID. NO: 3)

Bereits bei Zugabe von 0.5 µM JA286 war eine exakte Kapillarenpositionierung erfolgreich.

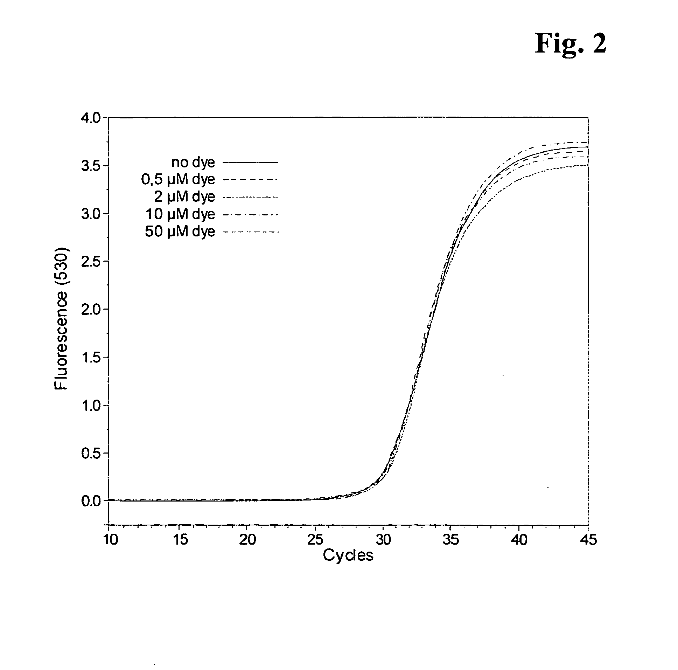

Wie in Fig. 2 dargestellt, konnte auch bei einer Zugabe von bis zu 50 mm µM J 286 keine Inhibition der Amplifikationsreaktion festgestellt werden.

### Beispiel 2

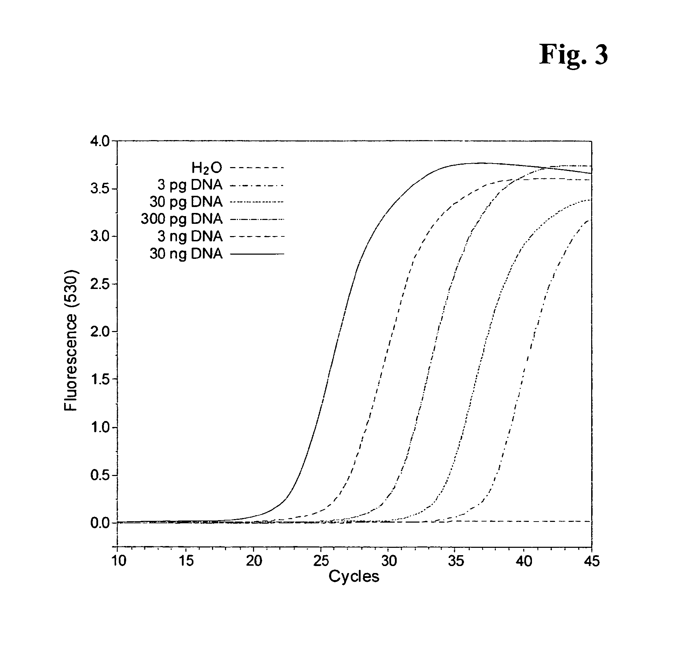

In einem weiteren Experiment analog zu Beispiel 1 wurden bei Zugabe von jeweils einer konstanten Menge von 0,5µM JA 286 Farbstoff veschiedene Mengen (3pg, 30 pg, 300pg, 3ng, 30 ng) an genomischer Template DNA zur Amplifikation des Cyclophillin A Gens verwendet. Wie aus Fig. 3 ersichtlich, führt die Anwesenheit des zusätzlichen Farbstoffs weder bei niedrigen noch bei hohen Template Konzentrationen zu einer Verfälschung des quantitativen Ergebnisses.

### Referenzliste

EP 0 747 447
LightCycler Operator's Manual, Version 3.5, Okt. 2000
US 5,210,015
US 5,487,972
US 5,736,333
US 5,804,375
US 6,214,979
WO 97/46707
WO 97/46712

## Patentansprüche

1. Verfahren zur Messung einer Nukleinsäureamplifikation in Real Time, umfassend
a) Bereitstellung eines Real Time PCR Instruments, enthaltend
- einen Reaktionsgefäßhalter zur Aufnahme von multiplen Reaktionsgefäßen
- Mittel zur Positionierung der multiplen Reaktionsgefäße in einem Reaktionsgefäßhalter relativ zur Detektionseinheit
b) Befüllung multipler Reaktionsgefäße mit einer Reaktionsmischung enthaltend thermostabile Polymerase, Deoxynukleotide und Puffer, mindestens zwei Amplifikations-Primer, mindestens eine Fluoreszenz-markierte Hybridisationssonde und einem freien, ungebundenem, passivem Fluoreszenzfarbstoff, der während und nach der gesamten Amplifikations-Reaktion in freier Form vorliegt
c) Bestimmung der Position der maximalen Fluoreszenzemission des freien, ungebundenen, passiven Fluoreszenzfarbstoffs in multiplen Reaktionsgefäßen in Abhängigkeit von ihrer relativen Position zur Detektionseinheit
d) Durchführung der Amplifikationsreaktion und Messung der Fluoreszenzemission der mindestens einen Hybridisationssonde während und optional nach der Amplifikationsreaktion für jedes Reaktionsgefäß an der Position mit maximaler Fluoreszenzemission aus Schritt c)

2. Verfahren nach Anspruch 1 **dadurch gekennzeichnet, dass** die Position des Reaktionsgefäßhalters verändert wird

3. Verfahren nach Anspruch 1 **dadurch gekennzeichnet, dass** die Position der Detektionseinheit verändert wird

4. System, bestehend aus
- einem Real Time PCR Instrument enthaltend Mittel zur Positionierung von multiplen Reaktionsgefäßen in einem Reaktionsgefäßhalter relativ zu einer Detektionseinheit
- einer Reaktionsmischung enthaltend thermostabile Polymerase, Deoxynukleotide, Puffer und einen freien, ungebundenen, passiven Fluoreszenzfarbstoff
**dadurch gekennzeichnet, daß**
der freie, ungebundene, passive Fluoreszenzfarbstoff während und nach einer gesamten Amplifikationsreaktion in vollständig freier Form vorliegt

5. System nach Anspruch 4, **dadurch gekennzeichnet, daß** die Reaktionsgefäße Kapillaren sind

6. Reaktionsmischung enthaltend thermostabile Polymerase, Deoxynukleotide, Puffer,
**dadurch gekennzeichnet, daß**
zusätzlich ein freier, ungebundener, passiver Floreszenzfarbstoff mit einer Emissionswellenlänge von mindestens 600 nm enthalten ist, der während und nach der gesamten Amplifikationsreaktion in freier Form vorliegt

7. Reaktionsmischung nach Anspruch 6, zusätzlich enthaltend mindestens zwei Amplifikations-Primer und mindestens eine Fluoreszenz-markierte Hybridisationssonde

8. Reaktionsmischung nach Anspruch 7, enthaltend mindestens eine TaqManSonde

9. Kit, enthaltend thermostabile Polymerase, Deoxynukleotide und Puffer
**dadurch gekennzeichnet, daß**
zusätzlich ein freier, ungebundener, passiver Fluoreszenzfarbstoff mit einer Emissionswellenlänge von mindestens 600 nm enthalten ist, der während und nach der gesamten Amplifikationsreaktion in vollständig freier Form vorliegt

10. Kit nach Anspruch 9, zusätzlich enthaltend mindestens eine Fluoreszenz-markierte Hybridisationssonde, vorzugsweise eine TaqMan Sonde

## Claims

1. Method for measuring a nucleic acid amplification in real time comprising
a) providing a real time PCR instrument containing
- a reaction vessel holder for holding multiple reaction vessels
- means for positioning the multiple reaction vessels in a reaction vessel holder relative to the detection unit
b) filling multiple reaction vessels with a reaction mixture containing thermostable polymerase, deoxynucleotides and buffer, at least two amplification primers, at least one fluorescently-labelled hybridization probe and a free, unbound, passive fluorescent dye which is present in a free form during and after the entire amplification reaction,
c) determining the position of maximum fluorescence emission of the free, unbound, passive fluorescent dye in multiple reaction vessels as a function of their position relative to the detection unit, and
d) performing the amplification reaction and measuring the fluorescence emission of the at least one hybridization probe during and optionally after the amplification reaction for each reaction vessel at the position of maximum fluorescence emission from step c).

2. Method according to claim 1, **characterized in that** the position of the reaction vessel holder is changed.

3. Method according to claim 1, **characterized in that** the position of the detection unit is changed.

4. System consisting of
- a real time PCR instrument containing means for positioning multiple reaction vessels in a reaction vessel holder relative to a detection unit
- a reaction mixture containing thermostable polymerase, deoxynucleotides, buffer and a free, unbound, passive fluorescent dye
**characterized in that**
the free, unbound, passive fluorescent dye is present in a completely free form during and after an entire amplification reaction.

5. System according to claim 4, **characterized in that** the reaction vessels are capillaries.

6. Reaction mixture containing thermostable polymerase, deoxynucleotides and buffer,
**characterized in that**
it additionally contains a free, unbound, passive fluorescent dye having an emission wavelength of at least 600 nm which is present in a free form during and after the entire amplification reaction.

7. Reaction mixture according to claim 6 additionally containing at least two amplification primers and at least one fluorescently-labelled hybridization probe.

8. Reaction mixture according to claim 7 containing at least one TaqMan probe.

9. Kit containing thermostable polymerase, deoxynucleotides and buffer
**characterized in that**
it additionally contains a free, unbound, passive fluorescent dye having an emission wavelength of at least 600 nm which is present in a completely free form during and after the entire amplification reaction.

10. Kit according to claim 9 additionally containing at least one fluorescently-labelled hybridization probe, preferably a TaqMan probe.

## Revendications

1. Procédé pour la mesure d'une amplification d'acides nucléiques en temps réel, comprenant
a) la mise en place d'un instrument de PCR en temps réel, contenant
- un support de récipients de réaction destiné à recevoir des récipients de réaction multiples
- des moyens pour positionner les récipients de réaction multiples dans un support de récipients de réaction par rapport à l'unité de détection
b) le remplissage des récipients de réaction avec un mélange réactionnel contenant une polymérase thermostable, des désoxynucléotides et un tampon, au moins deux amorces d'amplification, au moins une sonde d'hybridation marquée par fluorescence et un colorant par fluorescence passif, non lié, libre qui se trouve sous forme libre pendant et après la réaction d'amplification totale
c) la détermination de la position de l'émission de fluorescence maximale du colorant par fluorescence passif, non lié, libre dans les récipients de réaction multiples en fonction de leur position relative par rapport à l'unité de détection
d) la réalisation de la réaction d'amplification et la mesure de l'émission de fluorescence de ladite au moins une sonde d'hybridation pendant et éventuellement après la réaction d'amplification pour chaque récipient de réaction à la position de l'émission de fluorescence maximale de l'étape c).

2. Procédé selon la revendication 1, **caractérisé**
**en ce que** la position du support des récipients de réaction est modifiée.

3. Procédé selon la revendication 1, **caractérisé**
**en ce que** la position de l'unité de détection est modifiée.

4. Système formé par
- un instrument de PCR en temps réel contenant des moyens pour positionner des récipients de réaction multiples dans un support de récipients de par rapport à une unité de détection
- un mélange réactionnel contenant une polymérase thermostable, des désoxynucléotides, un tampon et un colorant par fluorescence passif, non lié, libre
**caractérisé**
**en ce que** le colorant par fluorescence passif, non lié, libre se trouve sous une forme complètement libre pendant et après une réaction d'amplification totale.

5. Système selon la revendication 4, **caractérisé en ce que** les récipients de réaction sont des capillaires.

6. Mélange réactionnel contenant une polymérase thermostable, des désoxynucléotides, un tampon, **caractérisé**
**en ce qu'**il contient en outre un colorant par fluorescence passif, non lié, libre présentant une longueur d'onde d'émission d'au moins 600 nm, qui se trouve sous forme libre pendant et après la réaction d'amplification complète.

7. Mélange réactionnel selon la revendication 6, contenant en outre au moins deux amorces d'amplification et au moins une sonde d'hybridation marquée par fluorescence.

8. Mélange réactionnel selon la revendication 7, contenant au moins une sonde TaqMan.

9. Kit contenant une polymérase thermostable, des désoxynucléotides et un tampon, **caractérisé**
**en ce qu'**il contient en outre un colorant par fluorescence passif, non lié, libre présentant une longueur d'onde d'émission d'au moins 600 nm, qui se trouve sous forme complètement libre pendant et après la réaction d'amplification complète.

10. Kit selon la revendication 9, contenant en outre au moins une sonde d'hybridation marquée par fluorescence, de préférence une sonde TaqMan.


### SEQUENCE LISTING

<110> Roche Diagnostics GmbH
   F. Hoffmann-La Roche AG
<120> Reaktionsgemisch für die Positionierung eines Reaktionsgefäßes relativ zu einer Detektionseinheit
<130> 22695
<160> 3
<170> Patent In version 3.2
<210> 1
   <211> 18
   <212> DNA
   <213> Artificial
<220>
   <223> Primer
<400> 1
   ggccgcgtct cctttgag 18
<210> 2
   <211> 23
   <212> DNA
   <213> Artificial
<220>
   <223> Primer
<400> 2
   cgagttgtcc acagtcagca atg 23
<210> 3
   <211> 26
   <212> DNA
   <213> Artificial
<220>
   <223> Primer
<400> 3
   aatggcaaga ccagcaagaa gatcac 26